# DEMANDE DE BREVET EUROPEEN

(11) **EP 1 229 201 A1**
(43) Date de publication de la demande: **07.08.2002**
(21) Numéro de dépôt: 02290168.0
(22) Date de dépôt: 23.01.2002
(51) Int. Cl.: E05F 15/00, G01L 3/14, B60J 7/057

(54) **Dispositif d'activation d'un organe fonctionnel d'équipement de véhicule automobile doté d'un dispositif de sécurité**

(30) Priorité: 05.02.2001 FR 0101517
(71) Demandeur: Meritor Light Vehicle Systems-France, 45600 Sully sur Loire (FR)
(72) Inventeur: Buchheit, Marc, 31240 Saint Jean (FR); Breynaert, Francois, 14000 Caen (FR)
(74) Mandataire: Jacobson, Claude

(57) **Abrégé**

Dispositif d'activation d'un organe fonctionnel d'équipement de véhicule automobile comportant un moteur électrique (1), un dispositif de transmission (17) relié d'une part à l'arbre de sortie (12) dudit moteur (1),et d'autre part audit organe fonctionnel, de sorte que le dispositif de transmission (17) et le moteur (1) exercent des efforts mutuels l'un sur l'autre, et un dispositif de sécurité adapté pour modifier l'alimentation électrique du moteur (1) en fonction d'un paramètre de fonctionnement significatif desdits efforts mutuels. Le moteur (1) est monté sur l'équipement avec au moins un degré de déplacement par rapport à celui-ci, et le dispositif de sécurité comporte des moyens (31, 32) de mesure du déplacement du moteur (1) délivrant des signaux de mesure qui déterminent le paramètre de fonctionnement.

Application à des systèmes de lève-vitre ou de toit ouvrant électriques.

## Description

L'invention concerne un dispositif d'activation d'un organe fonctionnel d'équipement de véhicule automobile comportant un moteur électrique, un dispositif de transmission relié d'une part à l'arbre de sortie dudit moteur et d'autre part audit organe fonctionnel, de sorte que le dispositif de transmission et le moteur exercent des efforts mutuels l'un sur l'autre, et un dispositif de sécurité adapté pour modifier l'alimentation électrique du moteur en fonction d'un paramètre de fonctionnement significatif desdits efforts mutuels.

En particulier, l'invention s'applique à un module de lève-vitre électrique ou un module de toit ouvrant électrique.

Afin de répondre à diverses normes de sécurité en vigueur dans plusieurs pays, les dispositifs de sécurité de tels dispositifs d'activation doivent être capables de détecter des conditions de fonctionnement anormales ou susceptibles de présenter un danger pour un utilisateur, et d'agir en conséquence sur le moteur électrique.

Par exemple, dans le cas cité plus haut d'un système de lève-vitre électrique, il est nécessaire d'interrompre le fonctionnement du moteur et/ou d'inverser le sens de rotation de son arbre, dès lors que l'on détermine que l'arbre moteur subit une résistance mécanique excessive. De telles conditions correspondent par exemple au pincement d'un membre d'un utilisateur entre le bord supérieur de la vitre et le cadre de porte, lorsque la vitre est actionnée dans son sens de fermeture.

Il existe déjà plusieurs types de dispositifs de sécurité permettant d'interrompre ou d'inverser le déplacement d'une vitre ou d'un toit ouvrant lors de l'apparition de telles anomalies de fonctionnement. De tels dispositifs utilisent par exemple des capteurs de couple associés à l'arbre moteur, ou encore des moyens de mesure de la puissance électrique consommée par le moteur, etc.

Or, ces dispositifs présentent une grande complexité de conception et de mise en oeuvre, ou ne sont pas adaptés pour réagir en temps réel lorsque se produit une anomalie de fonctionnement.

Un but principal de l'invention est de remédier à ces inconvénients et de proposer un dispositif d'activation du type cité plus haut, doté d'un dispositif de sécurité permettant, par des moyens simples et fiables, de lier le fonctionnement du moteur électrique à un paramètre mesuré, dépendant directement de l'effort résistant exercé sur l'organe fonctionnel s'opposant à l'effort moteur.

A cet effet, suivant l'invention, le moteur est monté sur l'équipement avec au moins un degré de déplacement par rapport à celui-ci, et le dispositif de sécurité comporte des moyens de mesure du déplacement du moteur délivrant des signaux de mesure qui déterminent le paramètre de fonctionnement.

Suivant d'autres caractéristiques de l'invention :
- le moteur est monté sur l'équipement par une liaison pivot,
- le dispositif comporte des moyens de rappel élastique du moteur dans une position neutre par rapport à l'équipement,
- lesdits moyens de rappel comportent au moins un ressort calibré,
- lesdits moyens de mesure comportent une jauge résistive,
- ladite jauge résistive est un élément résistif fixe par rapport à l'équipement, dont la résistance est fonction de la position du moteur par rapport audit élément résistif,
- le dispositif comporte un organe de commande du moteur et le dispositif de sécurité comporte un organe de calcul adapté pour recevoir les signaux de mesure et délivrer à l'organe de commande un signal d'alerte, en fonction desdits signaux de mesure,
- le signal d'alerte est un signal d'arrêt ou d'inversion du moteur si le paramètre de fonctionnement franchit une valeur de seuil prédéterminée.

L'invention vise également un équipement de véhicule automobile comportant un dispositif d'activation tel que décrit précédemment.

Cet équipement est constitué par exemple d'une porte de véhicule automobile ou, comme mentionné précédemment, d'un module de lève-vitre électrique ou d'un module de toit ouvrant électrique.

L'invention vise également un véhicule automobile comportant un dispositif d'activation tel que décrit précédemment, ou un équipement du type précité.

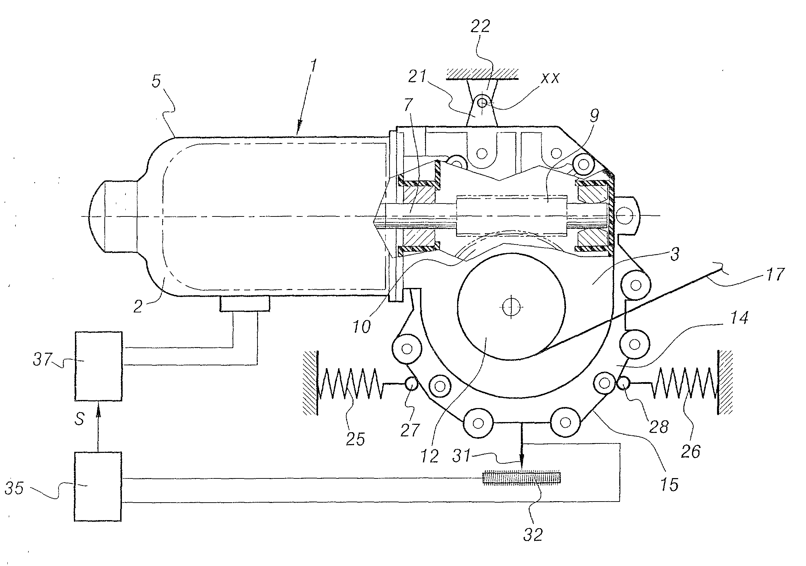

L'invention sera mieux comprise à la lecture de la description qui va suivre, donnée uniquement à titre d'exemple, et faite en référence à la figure unique annexée.

La figure unique est une vue schématique en plan d'un dispositif d'activation suivant l'invention, dans lequel le moteur électrique a été représenté avec un écorchement partiel.

Sur la figure, on a représenté un dispositif d'activation suivant l'invention destiné à un organe fonctionnel d'équipement de véhicule automobile. Le dispositif représenté s'applique plus particulièrement à un système de lève-vitre électrique, dans lequel l'organe fonctionnel est constitué par la vitre, l'équipement est constitué par le module de lève-vitre, tel que monté dans une porte, ou la porte équipée elle-même.

Le dispositif d'activation comprend en premier lieu un moteur électrique 1, qui désigne ici l'ensemble moto-réducteur composé de l'organe moteur proprement dit 2 et d'un organe réducteur 3.

L'organe moteur 2 présente essentiellement une carcasse statorique 5 dans laquelle est monté rotatif un arbre de rotor 7. Au voisinage de l'une de ses extrémités, l'arbre de rotor 7 présente une section filetée 9 engrenant avec une roue dentée 10 de l'organe réducteur 3. La roue dentée 10 entraîne en rotation, directement ou par l'intermédiaire de pignons intermédiaires non représentés, un tambour 12. L'ensemble constitué par la roue dentée 10, le tambour 12, et les éventuels pignons intermédiaires, est logé dans un carter 14 de l'organe réducteur 3. Le carter 14 présente un contour extérieur 15 configuré en came.

Le tambour 12 constitue, suivant la terminologie utilisée ici, l'arbre de sortie du moteur 1, et entraîne un dispositif de transmission 17 formé par un câble relativement rigide. Sous l'effet de la rotation du tambour 12, le câble 17 coulisse dans des guides non représentés et entraîne en translation, dans un sens ou dans l'autre, des supports solidaires de la vitre.

Le moteur 1 présente, sur le carter 14, une patte de fixation 21 en saillie, qui coopère avec un organe complémentaire de fixation 22 en une liaison à pivot, d'axe X-X sensiblement orthogonal à la direction générale du câble 17 au voisinage du moteur 1. L'organe complémentaire de fixation 22 est solidaire de la porte, ou du module de lève-vitre électrique fixé à la porte.

Ainsi, le moteur 1 est susceptible de rotation autour de l'axe X-X sous l'effet de l'effort exercé par le câble 17 sur le tambour 12.

Le moteur 1 est maintenu dans une position angulaire neutre par rapport à l'axe X-X, au moyen de deux ressorts axiaux 25, 26 de même axe, orthogonal à l'axe de rotation X-X. Une extrémité 27, 28 de chaque ressort 25, 26 est configuré en doigt portant sur la came 15 du carter 14 en des points opposés, de sorte que les efforts élastiques de réaction des ressorts 25, 26 sur le carter 14 s'exercent suivant des sens opposés. L'autre extrémité des ressorts 25, 26 est fixée à la porte ou au module. Les ressorts 25, 26 sont des ressorts calibrés, de façon que les déplacements angulaires du moteur 1 par rapport à l'axe X-X soient associés à un effort élastique résistant par une relation connue.

Dans une zone intermédiaire du carter 14, comprise entre les zones de contact avec les doigts 27, 28, le carter 14 présente un curseur en saillie 31 constituant le curseur associé à une résistance variable 32 de type linéaire. La résistance variable 32 et son curseur 31 sont reliés électriquement à un organe de calcul 35, adapté pour déterminer la valeur de résistance de la jauge résistive constituée par la résistance variable 32, correspondant à la position du curseur 31. L'organe de calcul 35 émet un signal d'alerte S vers un organe de commande 37 du moteur 1, ce signal S étant significatif de la position angulaire du moteur 1 par rapport à sa position neutre autour de l'axe X-X, et donc directement significatif de l'effort exercé par le câble 17 sur le tambour 12.

L'organe de commande, qui est électriquement relié au moteur 1, commande l'alimentation du moteur 1 en fonction du signal S qu'il reçoit de l'organe de calcul 35.

Il va de soi que l'on peut programmer l'organe de calcul 35 de plusieurs manières différentes, par exemple de façon que le signal d'alerte S provoque la coupure de l'alimentation du moteur électrique 1 dès lors que la valeur du paramètre de fonctionnement mesuré, à savoir la valeur de résistance de la résistance variable 32 franchit un seuil prédéterminé, ou encore que le signal S, dans cette même situation, provoque une alimentation électrique du moteur 1 qui inverse le sens de rotation de l'arbre de rotor 7.

Comme on le voit, on réalise grâce à l'invention un dispositif de sécurité exempt de capteurs de contrainte ou de couple, de conception ou de mise en oeuvre complexes.

## Revendications

1. Dispositif d'activation d'un organe fonctionnel d'équipement de véhicule automobile comportant un moteur électrique (1), un dispositif de transmission (17) relié d'une part à l'arbre de sortie (12) dudit moteur (1), et d'autre part audit organe fonctionnel, de sorte que le dispositif de transmission (17) et le moteur (1) exercent des efforts mutuels l'un sur l'autre, et un dispositif de sécurité adapté pour modifier l'alimentation électrique du moteur (1) en fonction d'un paramètre de fonctionnement significatif desdits efforts mutuels, **caractérisé en ce que** le moteur (1) est monté sur l'équipement avec au moins un degré de déplacement par rapport à celui-ci, et le dispositif de sécurité comporte des moyens (31, 32) de mesure du déplacement du moteur (1) délivrant des signaux de mesure qui déterminent le paramètre de fonctionnement.

2. Dispositif suivant la revendication 1, **caractérisé en ce que** le moteur (1) est monté sur l'équipement par une liaison pivot.

3. Dispositif suivant la revendication 1 ou 2, **caractérisé en ce qu'**il comporte des moyens (25, 26) de rappel élastique du moteur (1) dans une position neutre par rapport à l'équipement.

4. Dispositif suivant la revendication 3, **caractérisé en ce que** lesdits moyens de rappel (25, 26) comportent au moins un ressort calibré.

5. Dispositif suivant l'une des revendications 1 à 4, **caractérisé en ce que** lesdits moyens de mesure (31, 32) comportent une jauge résistive.

6. Dispositif suivant la revendication 5, **caractérisé en ce que** ladite jauge résistive (32) est un élément résistif fixe par rapport à l'équipement, dont la résistance est fonction de la position du moteur (1) par rapport audit élément résistif (32).

7. Dispositif suivant l'une des revendications 1 à 6, **caractérisé en ce qu'**il comporte un organe de commande (37) du moteur (1), et le dispositif de sécurité comporte un organe de calcul (35) adapté pour recevoir les signaux de mesure et délivrer à l'organe de commande (37) un signal d'alerte (S), en fonction desdits signaux de mesure.

8. Dispositif suivant la revendication 7, **caractérisé en ce que** le signal d'alerte (S) est un signal d'arrêt ou d'inversion du moteur (1) si le paramètre de fonctionnement franchit une valeur de seuil prédéterminée.

9. Equipement de véhicule automobile comportant un dispositif d'activation suivant l'une quelconque des revendications 1 à 8.

10. Equipement de véhicule automobile suivant la revendication 9, **caractérisé en ce qu'**il est constitué d'un module de lève-vitre électrique ou d'une porte contenant un module de lève-vitre électrique.

11. Equipement de véhicule automobile suivant la revendication 9, **caractérisé en ce qu'**il est constitué d'un module de toit ouvrant électrique.

12. Véhicule automobile comportant un dispositif d'activation suivant l'une quelconque des revendications 1 à 8 ou un équipement suivant l'une quelconque des revendications 9 à 11.
